# FASCICULE DE BREVET EUROPEEN

(11) **EP 2 666 043 B1**
(45) Date de publication et mention de la délivrance du brevet: **12.04.2017**
(21) Numéro de dépôt: 12700293.9
(22) Date de dépôt: 17.01.2012
(51) Int. Cl.: G02B 6/42

(54) **UNITE OPTIQUE POUR DISPOSITIF DE SIGNALISATION ET/OU D'ECLAIRAGE**
OPTISCHE EINHEIT FÜR EINE SIGNALISIERUNGS- UND/ODER BELEUCHTUNGSVORRICHTUNG
OPTICAL UNIT FOR A SIGNALLING AND/OR LIGHTING DEVICE

(30) Priorité: 18.01.2011 FR 1150375
(43) Date de publication de la demande: 27.11.2013
(60) Demande divisionnaire: 16202783.3
(73) Titulaire: Valeo Vision, 93012 Bobigny Cedex (FR)
(72) Inventeur: BAERT, Christophe, F-49460 Montreuil Juigne (FR); DENIS, Sébastien, F-49000 Angers (FR); SOENEN, Xavier, F-49320 Vauchretien (FR)
(86) Numéro de dépôt international: PCT/EP2012/050651
(87) Numéro de publication internationale: WO 2012/098123

(56) Documents cités:
- US-A1- 2009 219 732
- US-B1- 6 302 595
- US-B1- 6 779 929

## Description

L'invention concerne notamment une unité optique, notamment pour dispositif de signalisation et/ou d'éclairage pour véhicule automobile.

Dans le domaine de l'éclairage et de la signalisation de véhicules automobiles, il est de plus en plus fréquent d'utiliser des guides optiques. Un guide optique est par exemple, très schématiquement, un élément allongé de matière transparente, généralement de section de type cylindrique. A proximité de l'une des extrémités du guide, appelée face d'entrée du guide, est disposée une (ou plusieurs) sources lumineuses, par exemple une source lumineuse de petite taille du type diode électroluminescente: les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant du guide grâce à la présence d'éléments réfléchissants disposés sur la face dite face arrière du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou courbe, et amener une surface éclairante même dans des zones peu accessibles du projecteur ou du feu du véhicule. Il participe ainsi fortement au style du projecteur ou du feu.

On connaît par exemple par la demande de brevet EP 1 780 463 un tel dispositif d'éclairage à guide optique pour véhicule automobile.

La présente invention a pour objet d'améliorer ce type de dispositif.

L'invention a ainsi pour objet une unité optique, notamment pour dispositif de signalisation et/ou d'éclairage de véhicule automobile, comportant :
- au moins une source de lumière, notamment une LED,
- au moins une carte portant la source de lumière, cette carte comportant un circuit électrique pour alimenter la source de lumière,
- un guide de lumière réalisé au moins partiellement dans un matériau dans lequel de la lumière peut se propager, ce guide étant agencé pour recevoir de la lumière provenant de la source de lumière et guider cette lumière,
l'unité optique étant notamment caractérisée par le fait que la carte est portée, directement ou indirectement, par le guide de lumière.

Grâce à l'invention, il est possible de positionner précisément la source de lumière par rapport au guide de lumière, ce qui permet d'injecter dans ce guide le maximum de lumière.

De préférence, afin de faciliter les opérations d'assemblage, la carte est solidarisée, directement ou indirectement, au guide de lumière par encliquetage.

Dans un exemple de mise en oeuvre de l'invention, l'unité optique comporte un capuchon fixé, de préférence par encliquetage, au guide de lumière, et agencé pour recevoir la carte.

Le cas échéant, le capuchon est agencé pour être fixé à la carte par encliquetage.

Par exemple, le capuchon comporte au moins une patte d'encliquetage, notamment au moins deux pattes d'encliquetage notamment en regard l'une de l'autre.

Pour permettre un positionnement encore plus précis de la source de lumière par rapport au guide de lumière et faciliter les opérations de montage, le capuchon comporte au moins une patte de positionnement pour la carte, de préférence au moins deux pattes de positionnement notamment en regard l'une de l'autre.

Dans un exemple de mise en oeuvre de l'invention, le capuchon comporte au moins une fente agencée pour recevoir un bord de la carte. Ceci permet le positionnement et le maintien de la carte.

La carte peut, le cas échéant, porter un connecteur électrique relié au circuit électrique de la carte, et le capuchon comporte avantageusement un logement agencé pour recevoir au moins partiellement ce connecteur.

De préférence, le capuchon est agencé pour empêcher une fuite vers l'extérieur de lumière en provenance du guide de lumière et/ou de la source de lumière.

Ces fuites de lumière sont perçues comme inesthétiques au niveau du projecteur ou du véhicule, et sont donc indésirables.

Avantageusement le capuchon comporte un fût entourant au moins partiellement une portion d'extrémité du guide de lumière, le fût permettant d'empêcher des fuites de lumière vers l'extérieur.

Dans un exemple de mise en oeuvre de l'invention, le fût du capuchon entoure la source de lumière.

Par exemple, le guide de lumière comporte un corps principal de forme allongée suivant un axe curviligne prédéterminé, et une patte s'étendant transversalement à cette direction prédéterminée et se raccordant à ce corps.

De préférence, le capuchon comporte une cavité agencée pour recevoir au moins une portion d'extrémité de la patte transversale du guide de lumière.

Dans un exemple de mise en oeuvre de l'invention, le capuchon comporte au moins une patte d'encliquetage agencée pour coopérer avec la patte transversale du guide de lumière, cette patte d'encliquetage étant notamment parallèle au fût précité.

Le fût peut comporter une fente pour le passage de la patte transversale du guide de lumière.

Si on le souhaite, le capuchon est réalisé d'un seul tenant.

Avantageusement le guide de lumière est réalisé d'un seul tenant, y compris avec la patte transversale, laquelle patte correspond notamment à une patte d'injection.

Bien entendu, d'autres configurations sont possibles.

Dans un exemple de mise en oeuvre de l'invention, le guide de lumière comporte deux extrémités longitudinales et chacune de ces extrémités reçoit une source de lumière et une carte, et éventuellement un capuchon tel que précité.

La carte portant la source de lumière est notamment une carte de circuit imprimé.

L'invention a également pour objet un dispositif d'éclairage et/ou de signalisation, notamment pour véhicule automobile, comportant unité optique telle que définie ci-dessus.

Ce dispositif peut par exemple être agencé pour participer à une fonction réglementaire de signalisation, notamment une fonction DRL (feu de jour ou *Daytime Running Light*) ou une fonction de lampe de ville.

L'invention a encore pour objet un procédé pour fixer une source de lumière à un guide de lumière, dans un dispositif d'éclairage et/ou de signalisation d'un véhicule automobile, ce procédé comportant les étapes suivantes :
- fixer la source de lumière sur une carte de circuit imprimé,
- fixer, directement ou indirectement, la carte de circuit imprimé à une extrémité du guide de lumière.

Le procédé peut comporter l'étape suivante :
- interposer un capuchon entre le guide de lumière et la carte.

L'invention pourra être mieux comprise à la lecture de la description détaillée qui va suivre, d'un exemple de mise en oeuvre non limitatif de l'invention, et à l'examen du dessin annexé, sur lequel :
- les figures 1 à 3 illustrent, schématiquement et partiellement, en perspective, l'unité optique selon un exemple de mise en oeuvre de l'invention, suivant différentes vues,
- la figure 4 représente, schématiquement et partiellement, en perspective, l'unité optique des figures 1 à 3, sans la carte de circuit imprimé,
- la figure 5 représente, schématiquement et partiellement, de manière isolée, le guide de lumière de l'unité optique des figures 1 à 4, et
- la figure 6 représente, schématiquement et partiellement, en coupe, l'unité optique des figures 1 à 4.

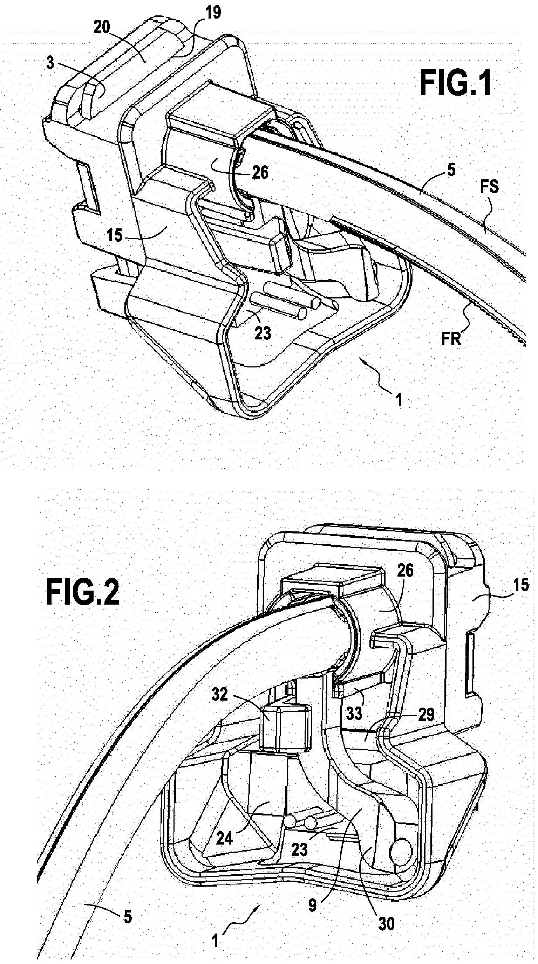

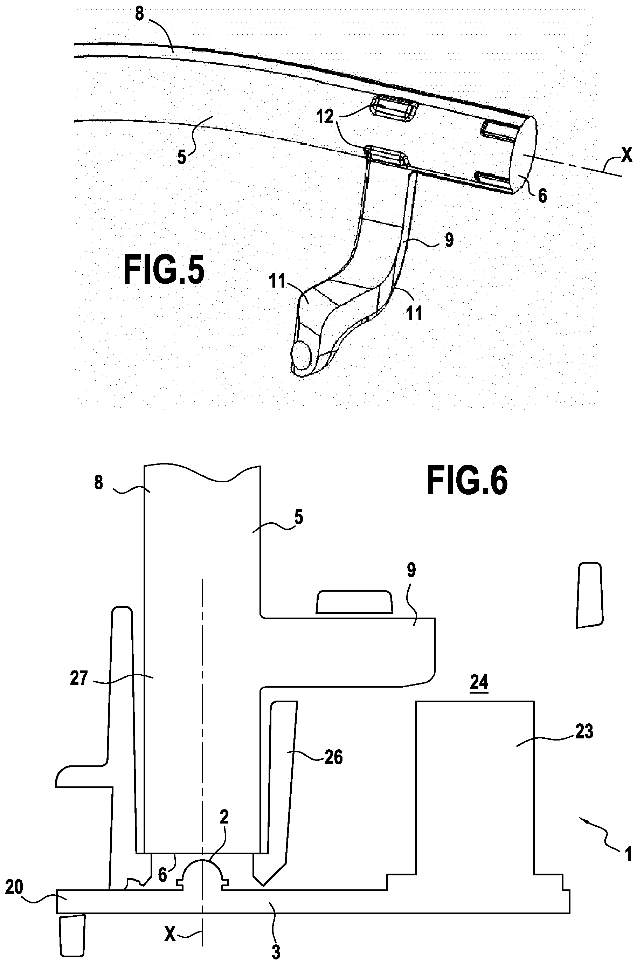

On a représenté, sur les figures 1 à 3 et 6, une unité optique 1 pour un dispositif de signalisation et/ou d'éclairage de véhicule automobile, comportant :
- une source de lumière formée par une LED 2 (visible sur la figure 6),
- une carte 3, globalement plane, portant la source de lumière 2, cette carte 3 comportant un circuit électrique (non représenté) pour alimenter la source de lumière 2,
- un guide de lumière 5 réalisé au moins partiellement dans un matériau dans lequel de la lumière peut se propager, ce guide étant agencé pour recevoir de la lumière provenant de la source de lumière 2 et guider cette lumière.

La carte 3 est portée par le guide de lumière 5, à savoir par exemple lors d'une manipulation (notamment sur une ligne de production), il est possible de procéder à une préhension du guide de lumière tout en ayant la carte solidarisée à ce guide de lumière, de préférence par l'intermédiaire d'un capuchon décrit plus loin.

Dans l'exemple considéré, le guide de lumière 5 présente une section transversale sensiblement circulaire.

Il est bien entendu qu'il peut aussi, dans d'autres modes de réalisation, avoir une section elliptique, carrée, ovale, voire plus complexe, et ce guide de lumière 5 est à base de polymère transparent en polycarbonate (ou polymétacrylate de méthyle PMMA, ou autre polymère approprié).

Le guide de lumière 5 comporte un corps principal 8 de forme allongée galbée suivant un axe curviligne prédéterminé X, et une patte 9 s'étendant transversalement à cette direction prédéterminée X (comme visible sur la figure 5).

En variante, le corps 8 du guide de lumière peut présenter une forme rectiligne.

La patte 9 présente, dans l'exemple décrit, une forme avec deux coudes 11. Cette patte 9 sert de patte d'injection.

Comme on peut le voir sur la figure 5, le corps 8 du guide de lumière 5 comporte également des bossages de positionnement 12 pour le positionnement d'un capuchon décrit plus loin.

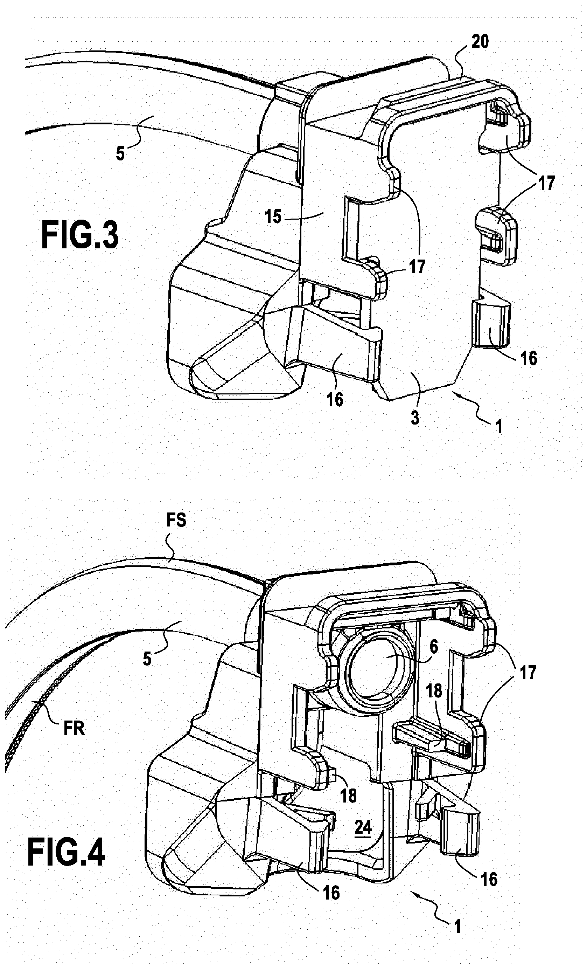

Comme illustré sur les figures 4 à 6, le guide de lumière 5 comprend une facette 6 d'entrée de lumière à l'une des extrémités du corps 8, au regard de laquelle est disposée la diode électroluminescente 2.

Eventuellement, le corps 8 du guide de lumière peut présenter une autre facette d'extrémité, opposée à la facette 6, en regard de laquelle est disposée une autre LED.

Le guide de lumière 5 comporte en outre deux faces principales orientées selon sa longueur suivant l'axe curviligne X :
- une première face FS constituant une face de sortie des rayons lumineux propagés dans le guide 5, cette face de sortie FS peut être lisse et continue, ou bien comporter des stries,
- une deuxième face FR, opposée à la première face FS, constituant une face de réflexion du guide 5, qui est munie d'éléments réfléchissants, par exemple de prismes.

Pour davantage d'explications sur un tel guide de lumière, il est possible de se référer par exemple à la demande de brevet EP 1 780 463.

L'unité optique 1 comporte un capuchon 15 fixé, par encliquetage, au guide de lumière 5, et agencé pour recevoir la carte 3.

A cet effet, le capuchon 15 comporte deux pattes d'encliquetage 16 en regard l'une de l'autre, et venant maintenir en position la carte 3 après le montage (voir figure 3 notamment).

Pour permettre un positionnement encore plus précis de la source de lumière 2 par rapport au guide de lumière 5 et faciliter les opérations de montage, le capuchon 15 comporte des pattes de positionnement 17 contre lesquelles la carte 3 est maintenue.

Le capuchon 15 comporte une pluralité d'appuis 18, au nombre de trois dans l'exemple décrit, sur lesquels repose la carte 3 (voir figure 4).

Le capuchon 15 comporte en outre une fente 19 agencée pour recevoir un bord 20 de la carte 3, en vue d'un positionnement et d'un maintien en position.

Dans l'exemple considéré, l'axe X du corps 8 du guide 5 coupe la carte 3 sensiblement à angle droit (voir figure 6).

La carte 3 porte un connecteur électrique 23 relié au circuit électrique de la carte, et le capuchon 15 comporte un logement 24 agencé pour recevoir au moins partiellement ce connecteur 23.

Le capuchon 15 est agencé pour empêcher une fuite vers l'extérieur de lumière en provenance du guide de lumière 5 et/ou de la source de lumière 2.

A cet effet, le capuchon 15 comporte un fût 26 entourant sensiblement une portion d'extrémité 27 du guide de lumière 5, le fût 26 permettant d'empêcher des fuites de lumière vers l'extérieur, comme représenté notamment sur les figures 1 et 6.

Le fût 26, sensiblement cylindrique, du capuchon entoure également la LED 2.

Par ailleurs, le capuchon 15 comporte une cavité 29 agencée pour recevoir au moins une portion d'extrémité 30 de la patte transversale 9 du guide de lumière 5 (voir figure 2 notamment) pour éviter des fuites de lumière issues de la patte 9.

Le capuchon 15 comporte une patte d'encliquetage 32 agencée pour coopérer avec la patte transversale 9 du guide de lumière, cette patte d'encliquetage 32 s'étendant étant notamment parallèle au fût 26 précité (voir figure 2 notamment).

Le fût 26 comporte une fente 33 pour le passage de la patte transversale 9 du guide de lumière 5.

Le capuchon 15 est réalisé d'un seul tenant, par exemple en matière plastique.

La carte 3 portant la source de lumière est notamment une carte de circuit imprimé.

## Revendications

1. Unité optique (1) de dispositif de signalisation et/ou éclairage de véhicule automobile, comportant :
- au moins une source de lumière (2), notamment une LED,
- au moins une carte (3) portant la source de lumière, cette carte comportant un circuit électrique pour alimenter la source de lumière,
- un guide de lumière (5) réalisé au moins partiellement dans un matériau dans lequel de la lumière peut se propager, ce guide étant agencé pour recevoir de la lumière provenant de la source de lumière et guider cette lumière,
l'unité optique étant **caractérisée par le fait que** le guide de lumière comporte un corps principal (8) de forme allongée suivant un axe curviligne prédéterminé, et une patte (9) s'étendant transversalement à cette direction prédéterminée, et l'unité optique comporte un capuchon (15) fixé par encliquetage au guide de lumière, et agencé pour recevoir la carte, le capuchon comporte au moins une patte d'encliquetage (32) agencée pour coopérer avec la patte (9) transversale du guide de lumière.

2. Unité selon la revendication précédente, **caractérisée par le fait que** la carte est solidarisée, directement ou indirectement, au guide de lumière par encliquetage.

3. Unité selon l'une des revendications précédentes, **caractérisée par le fait que** le capuchon est agencé pour être fixé à la carte par encliquetage.

4. Unité selon la revendication précédente, **caractérisée par le fait que** le capuchon comporte au moins une patte d'encliquetage (16), notamment au moins deux pattes d'encliquetage notamment en regard l'une de l'autre, pour coopérer avec la carte (3).

5. Unité selon l'une des deux revendications précédentes, **caractérisée par le fait que** le capuchon comporte au moins une patte de positionnement (17) pour la carte, de préférence au moins deux pattes de positionnement notamment en regard l'une de l'autre.

6. Unité selon l'une des revendications précédentes, **caractérisée par le fait que** le capuchon (15) est agencé pour empêcher une fuite vers l'extérieur de lumière en provenance du guide de lumière et/ou de la source de lumière.

7. Unité selon la revendication précédente, **caractérisée par le fait que** le capuchon comporte un fût (26) entourant au moins partiellement une portion d'extrémité du guide de lumière.

8. Unité selon la revendication précédente, **caractérisée par le fait que** le fût (26) du capuchon entoure la source de lumière.

9. Unité selon la revendication précédente, **caractérisée par le fait que** la patte d'encliquetage (32) est parallèle au fût précité.

10. Unité selon l'une des revendications précédentes, **caractérisée par le fait que** le guide de lumière comporte deux extrémités longitudinales et chacune de ces extrémités reçoit une source de lumière et une carte, et éventuellement un capuchon tel que précité.

11. Unité selon l'une des revendications précédentes, **caractérisée par le fait que** le guide de lumière (5) comporte en outre deux faces principales orientées selon sa longueur suivant l'axe curviligne (X) :
- une première face (FS) constituant une face de sortie des rayons lumineux propagés dans le guide (5), cette face de sortie (FS) peut être lisse et continue, ou bien comporter des stries,
- une deuxième face (FR), opposée à la première face (FS), constituant une face de réflexion du guide (5), qui est munie d'éléments réfléchissants, par exemple de prismes.

12. Dispositif d'éclairage et/ou de signalisation de véhicule automobile, **caractérisé par le fait qu'**il comporte une unité optique selon l'une des revendications précédentes.

13. Dispositif d'éclairage et/ou de signalisation selon la revendication précédente, **caractérisé par le fait que** ledit dispositif est agencé pour participer à une fonction réglementaire de signalisation, ladite fonction réglementaire de signalisation étant une fonction DRL ou une fonction de lampe de ville.

## Patentansprüche

1. Optische Einheit (1) für eine Signalgebungs- und/oder Beleuchtungsvorrichtung für Kraftfahrzeuge, mit:
- wenigstens einer Lichtquelle (2), insbesondere einer LED,
- wenigstens einer die Lichtquelle tragenden Leiterplatte (3), wobei die Leiterplatte einen Stromkreis zum Speisen der Lichtquelle aufweist,
- einem Lichtleiter (5), der wenigstens zum Teil aus einem Material ausgeführt ist, in dem sich das Licht ausbreiten kann, wobei der Lichtleiter dazu ausgebildet ist, das von der Lichtquelle stammende Licht aufzunehmen und dieses zu leiten,
wobei die optische Einheit **dadurch gekennzeichnet ist, dass** der Lichtleiter einen Hauptkörper (8) mit länglicher Form entlang einer vorbestimmten gekrümmten Achse und einen sich zu dieser vorbestimmten Richtung quer erstreckenden Fuß (9) umfasst, und die optische Einheit eine Kappe (15) umfasst, die durch Einrasten an dem Lichtleiter befestigt und dazu ausgebildet ist, die Leiterplatte aufzunehmen, wobei die Kappe wenigstens eine Rastlasche (32) umfasst, die dazu ausgebildet ist, mit dem sich quer erstreckenden Fuß (9) des Lichtleiters zusammenzuwirken.

2. Einheit nach dem vorhergehenden Anspruch,
**dadurch gekennzeichnet, dass** die Leiterplatte durch Einrasten direkt oder indirekt mit dem Lichtleiter fest verbunden ist.

3. Einheit nach einem der vorhergehenden Ansprüche,
**dadurch gekennzeichnet, dass** die Kappe dazu ausgebildet ist, an der Leiterplatte durch Einrasten befestigt zu werden.

4. Einheit nach dem vorhergehenden Anspruch,
**dadurch gekennzeichnet, dass** die Kappe wenigstens eine Rastlasche (16), insbesondere wenigstens zwei insbesondere einander gegenüberliegende Rastlaschen umfasst, um mit der Leiterplatte (3) zusammenzuwirken.

5. Einheit nach einem der beiden vorhergehenden Ansprüche,
**dadurch gekennzeichnet, dass** die Kappe wenigstens eine Positionierungslasche (17) für die Leiterplatte, vorzugweise wenigstens zwei insbesondere einander gegenüberliegende Positionierungslaschen umfasst.

6. Einheit nach einem der vorhergehenden Ansprüche,
**dadurch gekennzeichnet, dass** die Kappe (15) dazu ausgebildet ist, ein Entweichen von Licht, das vom Lichtleiter und/oder von der Lichtquelle stammt, nach außen zu verhindern.

7. Einheit nach dem vorhergehenden Anspruch,
**dadurch gekennzeichnet, dass** die Kappe einen Schaft (26) aufweist, der ein Endstück des Lichtleiters wenigstens zum Teil umgibt.

8. Einheit nach dem vorhergehenden Anspruch,
**dadurch gekennzeichnet, dass** der Schaft (26) der Kappe die Lichtquelle umgibt.

9. Einheit nach dem vorhergehenden Anspruch,
**dadurch gekennzeichnet, dass** die Rastlasche (32) zu dem vorgenannten Schaft parallel ist.

10. Einheit nach einem der vorhergehenden Ansprüche,
**dadurch gekennzeichnet, dass** der Lichtleiter zwei Längsenden aufweist und jedes dieser Enden eine Lichtquelle und eine Leiterplatte und gegebenenfalls wie vorstehend beschrieben eine Kappe aufnimmt.

11. Einheit nach einem der vorhergehenden Ansprüche,
**dadurch gekennzeichnet, dass** der Lichtleiter (5) ferner zwei Hauptstirnseiten aufweist, die seiner Länge nach entlang der gekrümmten Achse (X) ausgerichtet sind:
- eine erste Seite (FS), die eine Austrittsfläche der im Lichtleiter (5) ausgebreiteten Lichtstrahlen bildet, wobei die Austrittsfläche (FS) glatt und durchgehend sein kann oder auch Rillen aufweisen kann,
- eine der ersten Seite (FS) entgegengesetzte zweite Seite (FR), die eine Reflexionsfläche des Lichtleiters (5) bildet, die mit Reflexionselementen, wie zum Beispiel Prismen versehen ist.

12. Beleuchtungs- und/oder Signalgebungsvorrichtung für Kraftfahrzeuge,
**dadurch gekennzeichnet, dass** sie eine optische Einheit nach einem der vorhergehenden Ansprüche umfasst.

13. Beleuchtungs- und/oder Signalgebungsvorrichtung nach dem vorhergehenden Anspruch,
**dadurch gekennzeichnet, dass** die Vorrichtung dazu ausgebildet ist, an einer vorschriftsmäßigen Lichtsignalfunktion mitzuwirken, wobei die vorschriftsmäßige Lichtsignalfunktion eine DRL-Funktion oder eine Standlichtfunktion ist.

## Claims

1. Optical unit (1) for a motor vehicle signalling and/or lighting device, comprising:
- at least one light source (2), in particular an LED,
- at least one card (3) carrying the light source, this card comprising an electrical circuit for supplying the light source,
- a light guide (5) produced at least partially from a material in which the light can propagate, this guide being arranged so as to receive light coming from the light source and to guide this light,
the optical unit being **characterised by** the fact that the light guide comprises a main body (8) with an elongate shape along a predetermined curvilinear axis, and a lug (9) extending transversely to this predetermined direction, and the optical unit comprises a cowl (15) fixed by snapping on the light guide and arranged to receive the card, the cowl comprising at least one snap-on lug (32) arranged to cooperate with the transverse lug (9) of the light guide.

2. Unit according to the preceding claim, **characterised by** the fact that the card is, directly or indirectly, secured to the light guide by snapping on.

3. Unit according to one of the preceding claims, **characterised by** the fact that the cowl is arranged so as to be fixed to the card by snapping on.

4. Unit according to the preceding claim, **characterised by** the fact that the cowl comprises at least one snap-on lug (16), in particular at least two snap-on lugs especially facing each other, to cooperate with the card (3).

5. Unit according to one of the preceding two claims, **characterised by** the fact that the cowl comprises at least one positioning lug (17) for the card, preferably at least two positioning lugs especially opposite each other.

6. Unit according to one of the preceding claims, **characterised by** the fact that the cowl (15) is arranged so as to prevent leakage to the outside of light coming from the light guide and/or from the light source.

7. Unit according to the preceding claim, **characterised by** the fact that the cowl comprises a barrel (26) at least partially surrounding an end portion of the light guide.

8. Unit according to the preceding claim, **characterised by** the fact that the barrel (26) of the cowl surrounds the light source.

9. Unit according to the preceding claim, **characterised by** the fact that the snap-on lug (32) is parallel to the aforementioned barrel.

10. Unit according to one of the preceding claims, **characterised by** the fact that the light comprises two longitudinal ends and each of these ends receives a light source and a card, and optionally a cowl as aforementioned.

11. Unit according to one of the preceding claims, **characterised by** the fact that the light guide (5) further comprises two main faces oriented along its length along the curvilinear axis (X):
- a first face (FS) constituting an exit face for the light rays propagated by the guide (5), this exit face (FS) may be smooth and continuous, or comprise serrations,
- a second face (FR), opposite to the first face (FS), constituting a reflection face of the guide (5), which is provided with reflective elements, for example prisms.

12. Motor vehicle lighting and/or signalling device, **characterised by** the fact that it comprises an optical unit according to one of the preceding claims.

13. Lighting and/or signalling device according to the preceding claim, **characterised by** the fact that said device is arranged so as to participate in a regulatory signalling function, said regulatory signalling function being a DRL function or a town lamp function.
